# EUROPEAN PATENT SPECIFICATION

(11) **EP 4 618 054 B1**
(45) Date of publication and mention of the grant of the patent: **21.10.2026**
(21) Application number: 25162605.7
(22) Date of filing: 10.03.2025
(51) Int. Cl.: G07F 17/32

(54) **MANAGEMENT SYSTEM**
VERWALTUNGSSYSTEM
SYSTÈME DE GESTION

(30) Priority: 11.03.2024 JP 2024037665
(43) Date of publication of application: 17.09.2025
(60) Divisional application: 26167099.6 / 4 738 299
(73) Proprietor: ANGEL GROUP CO., LTD., Higashiomi-shi Shiga 527-0232 (JP)
(72) Inventor: SHIGETA, Yasushi, Higashiomi-shi, Shiga 527-0232 (JP)
(74) Representative: Bardehle Pagenberg Partnerschaft mbB Patentanwälte Rechtsanwälte

(56) References cited:
- US-A1- 2019 147 689
- US-A1- 2022 180 704
- US-A1- 2023 038 847
- US-A1- 20240 005 726
- US-A1- 20240 362 969

## Description

### TECHNICAL FIELD

This invention relates to a management system for managing roulette games played with roulette chips at a roulette table.

### TECHNICAL BACKGROUND

In recent years, in casino facilities, in games played using gaming chips at tables, wagered betting gaming chips (hereinafter referred to as "betting chips") are managed by reading RFID tags embedded in the gaming chips or by capturing the gaming chips with a camera and analyzing the images. The system supports dealer operations such as collecting betting chips, paying out dividends to betting chips, etc., according to game results (see, for example, Patent Document 1).

Here, when the betting chips are ascertained by reading the RFID tags embedded in the betting chips, the betting chips can be read relatively accurately as long as there is no abnormality in the RFID tags. On the other hand, when using RFID, it is often relatively difficult to accurately distinguish and recognize locations of the chips (which represents the betting target).

In contrast, when betting chips are captured by a camera, the position of the betting chips can be recognized relatively accurately, but it may not be possible to recognize betting chips that are in the camera's blind spot due to other betting chips.

The prior art document US 2022/0180704 A1 describes a controller of a table game management system which is configured to be able to recognize that a bet chip bet by a winning player and a payout chip paid to the winning player are transferred outside a chip placement area, and associate, in a database, ID information of the payout chip with ID information of the bet chip transferred outside the chip placement area at the same timing as the payout chip.

### PRIOR ART LIST

Patent Document 1: Japanese Patent Publication No. 2023-112690

### SUMMARY OF THE INVENTION

The present invention provides a solution to the above-mentioned problem according to the independent claim. Preferred embodiments are provided by the dependent claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims. The present invention aims to provide a system that recognizes betting chips and supports dealer operations, especially in roulette games. In particular, the present invention supports dealer operations by recognizing betting chips in roulette games using both RFID tags and a camera, based on the advantages and disadvantages of recognizing betting chips using RFID tags and a camera as described above.

One aspect of the management system is a management system for managing a roulette game played with roulette chips on a roulette table equipped with a wheel and a betting area in which a plurality of betting target areas are segmented. In the roulette game, the roulette chips having different colors for different players are used. The roulette chip has an RFID tag that stores information corresponding to at least its color, and the color appears at least on a side surface of the roulette chip. The management system comprises: at least two cameras, each configured to produce an image or video of the betting area from different oblique upward positions; one or more betting area antennas installed into the betting area and configured to read the RFID tags of the roulette chips placed in the betting area; an analyzer configured to determine, by analyzing the images or video, the number of the roulette chips for each color bet on the betting area, a plurality of boundaries of adjacent betting areas, and a positional relationship between the roulette chips and the boundaries; a controller configured to control the at least two cameras, the one or more betting area antennas, and the analyzer to perform a dealer support processing for payouts; and a display configured to display a result of the dealer support processing. The controller is configured to: read the RFID tag using the one or more betting area antennas to obtain a first reading result for winning chips remaining after a game result has been determined on the wheel and non-winning chips have been collected by a dealer, capture the winning chips using the at least two cameras to obtain first images or videos, and analyze the first images or videos using the analyzer to determine a number of image-recognizable winning chips for each color for which occlusion has not occurred in any one of the first images or videos; subtract the number of the image-recognizable winning chips for each color from a number of winning chips for each color indicated by the first reading result to determine a number of occluded winning chips for each color having occlusion in all of the first images and videos; and calculate a payout amount for each color based on the number of image-recognizable winning chips for each color and a payout multiplier for each of the occluded winning chips. The display is configured to display the payout amount for each color calculated by the controller.

With this configuration, the controller may identify the position of winning chips bet and the number of winning chips for each color and calculate the payout amount for each color, and the display may display the payout amount for each color. This enables the dealer to easily recognize which color chips at which betting position require what amount of payout by simply checking the display.

The above management system may further comprise: a collected chip antenna configured to read the RFID tags of the non-winning chips collected by the dealer. The controller may be configured to: read the RFID tags of all the roulette chips that have been bet in the betting area using the one or more betting area antennas to obtain a second reading result; obtain a third reading result by reading the RFID tags of the non-winning chips using the collected chip antenna; and output an alert when a result of subtracting a number of non-winning chips for each color, as indicated by the third reading result, from a number of all the roulette chips bet, as indicated by the second reading result, does not match the number of winning chips for each color, as indicated by the first reading result.

With this configuration, the management system may output an alert when there is a fraud in the collection of non-winning chips.

The above management system may further comprise: a player identification system configured to identify a relationship between a player participating in the roulette game and a color of the roulette chips assigned to the player; and a recording device configured to record a history and/or accumulation of bet amounts for each of the players. The controller may be configured to determine the history and/or accumulation to be recorded in the recording device based on the number of chips for each color of all the roulette chips that have been bet.

With this configuration, the management system may implement a patron rating system that records the history and/or accumulation of the player's bet amount.

### BRIEF DESCRIPTION OF DRAWINGS

Figure 1 is a diagram showing a roulette table to which the management system of an embodiment is applied;
Figure 2 is a plan view showing a roulette table to which the management system of an embodiment is applied;
Figure 3 is an example showing a betting area of the management system of an embodiment;
Figure 4 is an example showing a chip bet on the betting area of the management system of an embodiment;
Figure 5 is a diagram showing a gaming chip of an embodiment;
Figure 6 is an example of an arrangement of antennas of a gaming table in an embodiment;
Figure 7 is an example showing a chip stack captured by a camera in an embodiment;
Figure 8 is a block diagram showing a configuration in an embodiment;
Figure 9 is an example showing a display of a dealer support screen showing results of a dealer support processing of an embodiment;
Figure 10 is an example showing winning chips in the image of a first camera of an embodiment;
Figure 11 is an example showing the winning chips in the image of a second camera of an embodiment; and
Figure 12 is an example showing the winning chips in the image of a third camera of an embodiment.

### DETAILED DESCRIPTION OF THE INVENTION

The following is a description of embodiments for implementing the invention. The embodiments described below are merely examples, and the invention is not limited to the embodiments described below. In addition, each element of a plurality of embodiments can be arbitrarily combined.

### (Outline of Roulette Table)

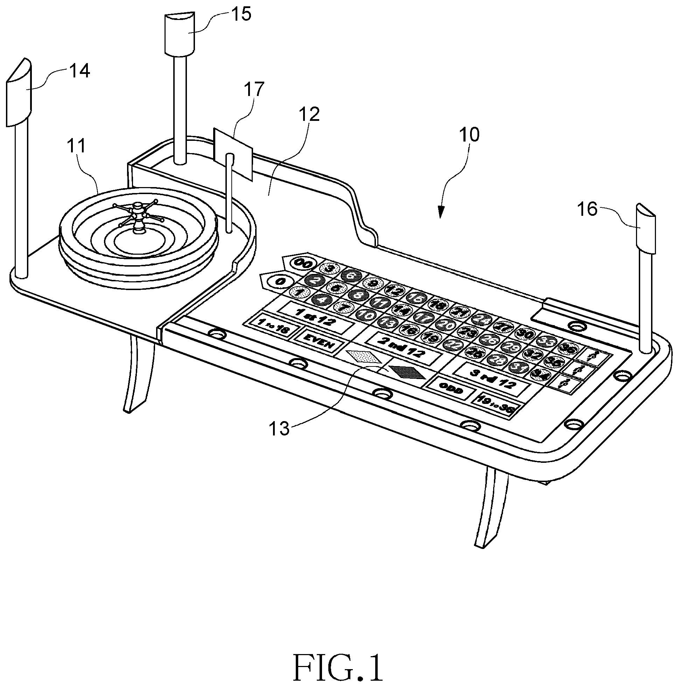

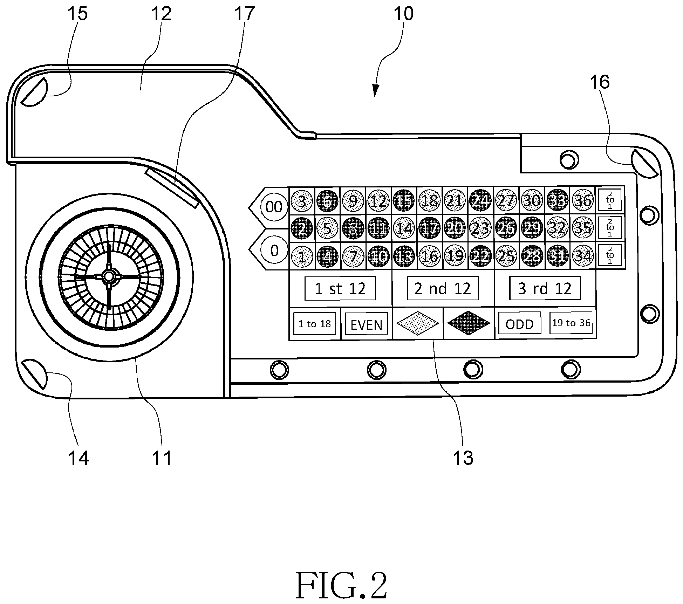

Figure 1 illustrates a roulette table incorporating the management system of the present embodiment, while Figure 2 provides a top-down view of the same table. As depicted in Figures 1 and 2, a wheel 11 is installed in one corner of the roulette table 10 (hereinafter simply referred to as the "table"). Adjacent to the wheel 11 is a dealer chip area 12, designated for placing the dealer's gaming chips. The dealer stands at the central dealer position on the opposite side of the table from the wheel 11 and deals the game.

From the center of the table 10 to the end opposite wheel 11, a betting area 13 is laid out on the table surface. In the example shown in Figures 1 and 2, wheel 11 is located at the back on the right-hand side of the dealer, dealer chip area 12 is located at the front on the right-hand side of the dealer, and betting area 13 is laid out from the front to the left-hand side of the dealer. A plurality of players are positioned in the player positions set up around the table 10, avoiding the dealer position and surrounding the betting area 13, and place their bets by placing gaming chips on the betting area 13.

The table 10 is provided with a first camera 14, a second camera 15, and a third camera 16 for capturing an image of the betting area 13. The first camera 14, the second camera 15, and the third camera 16 are all mounted on poles erected on the table 10. The first camera 14 is installed in the corner of the table 10 where the wheel 11 is located. The second camera 15 is installed in the corner of the table 10 where the dealer chip area 12 is located. The third camera 16 is provided in the corner of the table opposite the first camera 14. The first camera 14, the second camera 15, and the third camera 16 should all be located so as not to interfere with betting by players, chip collection and payouts by dealers, and other operations.

The first camera 14, the second camera 15, and the third camera 16 photograph the betting area 13 from diagonally above and diagonally below. The first camera 14, the second camera 15, and the third camera 16 each capture images of the betting area 13 from different directions. In the example in Figure 1, the first camera 14, second camera 15, and third camera 16 are installed at approximately the same height from the table surface, but the heights of the first camera 14, the second camera 15, and the third camera 16 may differ from each other.

Next to the wheel 11 on the table 10, there is additionally a display 17 for displaying the dealer support screen described below to the dealer. The display 17 is also mounted on a pole erected on the table 10, but may alternatively be embedded in the table surface. In this embodiment, the display 17 is provided in the table 10, it may also be provided on the edge of the table 10 so as not to interfere with the dealer's dealing. The display 17 may also be oriented in a direction that can be observed by players as well as the dealer.

### (Betting Area and Betting)

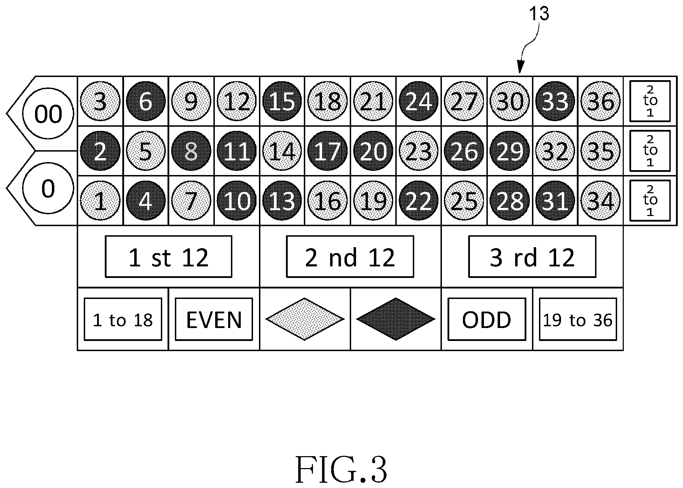

Figure 3 shows an example of a betting area. There are two types of betting areas of the roulette game, European style and American style, and the example in Figure 3 shows the American style betting area. The present invention can be applied to the European style betting area as well.

In this embodiment, each sub-area demarcated within the betting area 13 is referred to as a betting target area. The betting area 13 can be broadly divided into an inside betting area, which consists of betting target areas assigned numbers 0, 00, and 1-36, and an outside betting area, which consists of all other betting target areas. The betting target areas in the outside betting area include column areas for betting on the 12 betting targets in a horizontal row, a dozen area for betting on the first 12, middle 12, or last 12 betting targets, low/high areas for betting on the 18 betting targets numbered 1 through 18 or 18 betting targets numbered 19 through 36 area, odd/even areas to bet on odd-numbered 18 betting targets or even-numbered 18 betting targets, and red/black areas to bet on red 18 betting targets or black 18 betting targets.

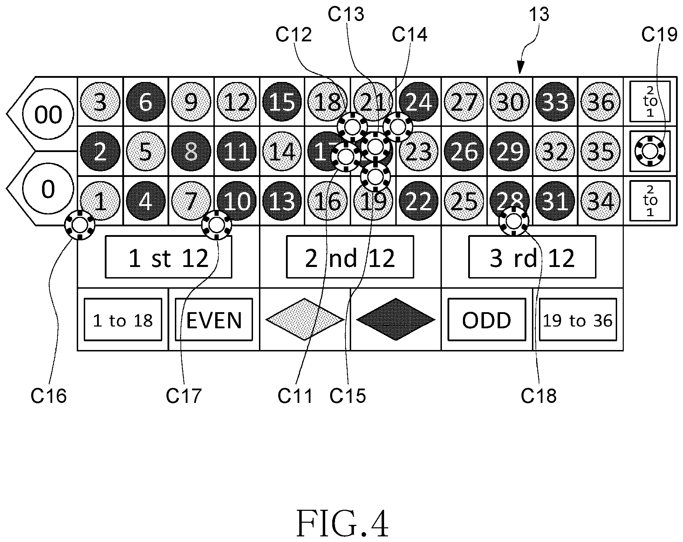

Figure 4 shows an example of chips being bet on the betting areas. The chips can be bet by placing them in the small area that serves as the betting target area. In the inside betting area, bets can be placed on the boundary of the betting target area, and bets can be placed on the betting targets on both sides of the boundary at the same time. If a betting chip is placed on the boundary so that it straddles the two inside betting target areas, such as chips C11 and C15, the betting chip is placed on both of the two betting targets (numbered17 and 20 for the chip C11 and numbered 19 and 20 for the chip C15), which is called a split bet. If a betting chip is placed on the intersection of the boundaries of the four inside betting areas, such as chips C12 and C14, it means that the player has placed a bet on all of the four betting targets (numbers 17, 18, 20 and 21 for the chip C12, and numbers 20, 21, 23 and 24 for the chip C14), which is called a corner bet.

If a betting chip is placed within the betting target area of an inside bet so that it does not touch any of the boundaries, such as chip C13, it means that the betting chip was placed only on the relevant betting target (numbered 20 in Figure 4), which is called a straight up. If a betting chip is placed on the boundary between the betting target area of the inside bet and a dozen area, such as chip C18, the betting chip is placed on the three corresponding vertical betting targets (numbered 28 to 30 for the chip C18 in Figure 4), which is called a street bet. If a betting chip is placed on the boundary between the two inside betting target areas and the dozen area, such as chip C17, the player has bet on the corresponding two vertical rows of six betting targets (numbered 7-12 for chip C17 in Figure 4), which is called a double street bet. If a betting chip is placed at the intersection of the boundary between the number 1, the number o, and the dozen area, such as chip C16, the player has bet on the five corresponding vertical betting targets (numbered 0, 00, and 1-3 for the chip C16 in Figure 4), which is called a five numbers bet. When a betting chip is placed in the column area, such as chip C19, it means that the player has bet on 12 corresponding horizontal betting targets (numbered 2, 5, ... 35 for the chip C19 in Figure 4), which is called a column bet.

For each of the above bets, the house odds (payout rates or payout multiplier) are defined according to the probability of winning the bet, ensuring a house edge (deduction rate). For example, in the case of the American style as shown in Figure 4, the probability of winning a straight up bet is 1/38 (about 2.63%), but the house odds are set at 36 to 1, ensuring a house edge of 5.26%. Also, for example, the probability of winning a column bet is 12/38 (about 31.58%), but the house odds are set at 3 to 1, ensuring a house edge of 5.26%.

As mentioned above, in a roulette game, the bets are different depending on the position where the gaming chips are placed. The betting area 13 has a plurality of betting target areas arranged in a two-dimensional direction, with adjacent betting target areas touching each other via boundaries.

### (Gaming chip)

The following is a description of the gaming chips used in roulette games (hereinafter simply referred to as "chips"). In casinos, table games such as baccarat and blackjack are offered, and a common gaming chip can be used at these game tables. However, in roulette games, special roulette chips for roulette game (hereinafter simply referred to as "roulette chips") are used, which are different from the general gaming chips used in these other games (hereinafter simply referred to as "general chips").

When the player starts a roulette game, he/she borrows roulette chips from the dealer. Roulette chips can be borrowed in cash or general chips. Depending on the casino, the player may be able to borrow only in cash or only in general chips. The roulette chips have an appearance that can be distinguished by groups. This makes it possible to determine which chips were bet by which player when a plurality of players place bets on the betting area 13 at the same time.

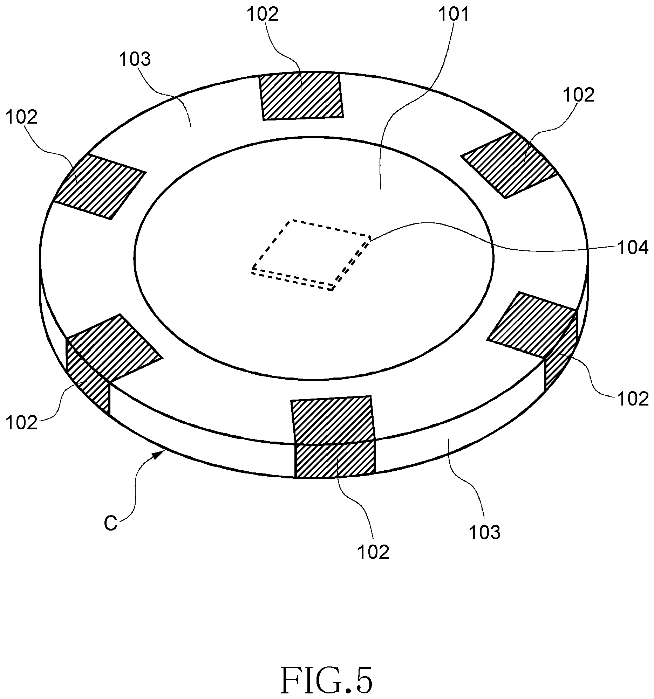

Figure 5 is a diagram showing the gaming chip in this embodiment. A gaming chip C has a group specific portion which is different for each group, and a common portion which is common to a plurality of groups. In the example of Figure 5, the gaming chip C has a disc shape with two circular planes (top and bottom surfaces), and a side surface has a circular ring shape along the circular perimeter. In the example the gaming chip C in Figure 5, a central circular portion 101 of the planes and the six insert portions 102 arranged at equal angular intervals from the periphery of the planes to the side surface are the common portions, while the other portions 103 of the planes and the side surface are the group specific portions. The group specific portion has a color assigned to each group, and the common portion is white. The group specific portion and the common portion can be observed from the top, bottom and side surfaces.

The gaming chip may be composed of only the group specific portion without the common portion. In this embodiment, the group specific portion represents a group by its color, but alternatively, the group specific portion may represent a group by its pattern or design. In this embodiment, the roulette chips have fixed value, but there may be a plurality of types of gaming chips of different values for each group. In this case, for example, the central circular portion 101, which is the common portion, may be marked with a number indicating the value, and the color of the insert portion 102 may be different from that of the other portion 103. The values of the gaming chips in the same group are all the same, but different fixed value may be set for different groups.

The dealer assigns different groups of gaming chips (and thus different specific colors) to different players. For example, if a roulette table allows six players to play at the same time, the table 10 will have six different specific colored gaming chips. Players who have finished playing in the roulette game and wish to leave the table will liquidate by returning the gaming chips they were using to the dealer. The liquidation shall be made in general chips or cash.

The gaming chip has a built-in RFID tag 104. The RFID tag 104 stores information to identify at least the group to which the gaming chip belongs. When gaming chips with plurality of values are available, the RFID tag 104 also stores the value information. As described above, since the color of the group specific portion of the gaming chip differs for each group, the RFID tag 104 can also be used to store information to identify the color of the group specific portion.

In this embodiment, the RFID tag 104 stores a chip ID as information for identifying the group to which the gaming chip belongs. In order to identify the group to which the gaming chip belongs using the chip ID, a chip database, which is not shown in the figure, is provided. The chip database stores information on the group to which the gaming chip belongs (i.e., the color of the group specific part of the gaming chip) for each chip ID. Therefore, by identifying the chip ID and referring to the chip database, the group of the gaming chip with the chip ID can be identified.

The gaming chips may have information corresponding to the group of the gaming chips stored in the RFID tag 104, and by reading the RFID tag 104, the group to which the gaming chips belong can be identified directly from the RFID tag 104 without preparing and referring to a database.

### (RFID reading of chips)

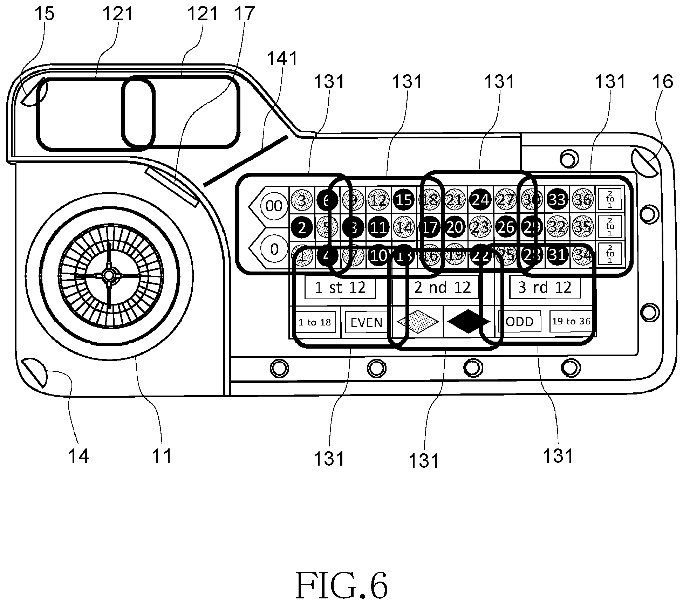

One or more antennas are embedded under the table surface of the gaming table 10 to read the RFID tags 104 of the gaming chips placed on the table surface. Figure 6 shows an example of the placement of the antennas in the gaming table. There are a plurality of dealer chip area antennas 121 in a dealer chip area 12. The reading ranges of adjacent dealer chip area antennas 121 overlap each other, so that the entire dealer chip area 12 is covered by the reading range of at least one of the dealer chip area antennas 121.

The betting area 13 is similarly provided with a plurality of betting area antennas 131. The reading ranges of adjacent betting area antennas 131 partially overlap each other, so that the entire betting area 13 is covered by the reading range of at least one of the betting area antennas 131. A shield 141 is provided between the dealer chip area 12 and the betting area 13. This prevents the dealer chip area antenna 121 in the dealer chip area 12 from reading the RFID tag of the chip in the betting chip area 13, and also prevents the betting area antenna 131 in the betting chip area 13 from reading the RFID tag of the chip in the dealer chip area 12.

### (Betting Area Shooting)

As described above, the first camera 14, the second camera 15, and the third camera 16 all capture images of the betting area 13 from diagonally above. As a result, a chip stack consisting of a plurality of chips placed on top of each other in the betting area 13 is captured from diagonally above.

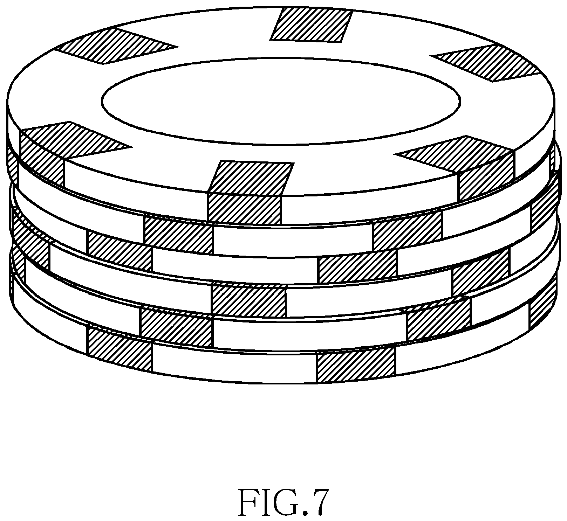

Figure 7 shows an example of a chip stack that is captured by the cameras in this system. The first camera 14, the second camera 15, and the third camera 16 capture images of the chip stack from diagonally above, so that the top surface of the topmost chip in the chip stack and the sides of all chips in the chip stack will appear in the captured images, as shown in Figure 7.

As mentioned above, since the side surfaces of the chips have at least group specific portions, when the chip stack is captured as shown in Figure 7, the group specific portions of all the chips in the chip stack will appear in the images.

### (Roulette Game Procedure)

In a roulette game, the dealer first allows the players to place their bets and throws a ball into the spinning wheel 11. The players can still place bets while the ball is spinning around the edge of wheel 11 due to centrifugal force. When the centrifugal force on the ball weakens, the dealer will place his or her hand flat on the betting area 13 and call "No more bets". This call prohibits the players from placing a new bet or changing the bets, and the bets are finalized.

When the ball falls into the wheel 11 and settles into one of the 0, 00, 1-36 pockets of the spinning wheel 11, the game result is confirmed. The dealer places a dolly on the betting target corresponding to the pocket into which the ball fell. If there are chips on the relevant bet, the dealer places the dolly on top of those chips. The dealer then collects the bet chips that were not won in the game (hereinafter referred to as "non-winning chips") - that is, the chips that the dealer should collect - into the dealer chip area 12, according to the game results. Then, the chips are taken out of the dealer chip area 12 and a payout is made for the betting chips that won the game (hereinafter referred to as "winning chips"). When paying out the chips to the winning chips, the dealer pays out the same type of chip as the winning chips, in the number (or amount) to the payout rate.

When the player receives the winning chips and the payout chips paid out, the procedure for that game is over and the next game's bets can be placed. The dealer starts the wheel 11 spinning for the next game, and throws the balls into the wheel 11. Thereafter, the game is repeated by repeating these steps.

### (System Configuration)

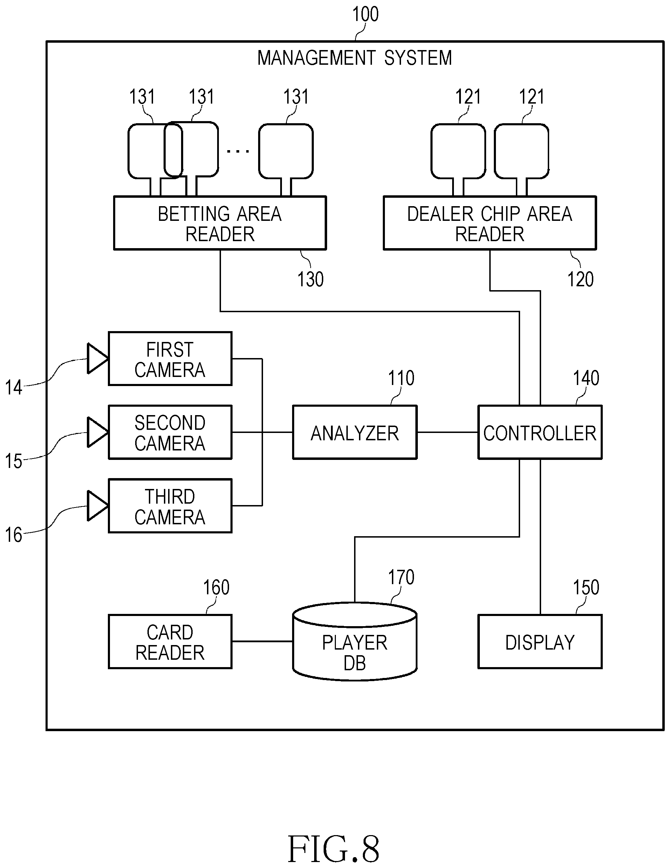

Figure 8 shows a block diagram of the configuration of the management system of this embodiment. The management system 100 manages a roulette game played with roulette chips on the roulette table 10 equipped with the wheel 11 and the betting area 13 in which a plurality of betting target areas are demarcated. The management system 100 is equipped with the first camera 14, the second camera 15, and the third camera 16, which capture images of the betting area 13 from respectively different diagonal upper positions and generate images.

The analyzer 110 recognizes the number of the roulette chips for each color bet on the betting area 13 and the plurality of boundaries between adjacent betting areas by analyzing the images respectively captured by the first camera 14, the second camera 15 and the third camera 16. The analyzer 110 further determines the positional relationship between the recognized roulette chips and the recognized boundaries. In particular, the analyzer 110 analyzes captured images of the winning chips remaining in the betting area 13 after the dealer has collected the non-winning chips.

The analyzer 110 analyzes the image using machine learning or deep learning. For this purpose, the analyzer 110 is trained using images obtained by placing chip stacks on the betting area 13 and capturing images of them. To prepare images for learning (or training images), chip stacks are captured under various conditions. The images for learning are prepared for each of a plurality of groups, and the images for learning are also prepared for each number of chips in the chip stack. In addition, images of the chips in chip stacks neatly aligned and stacked out of alignment with each other are prepared as the images for learning. In addition, images captured under relatively dark lighting, relatively bright lighting, and lighting with a specific color cast are also prepared as training images. The analyzer 110 that has learned from these training images can perform robust image recognition under various conditions.

When adjacent betting target areas are demarcated by boundary lines, the analyzer 110 may learn the boundary lines as recognition targets. And when each betting target area is painted in a predetermined color and the betting target areas are demarcated by differently colored adjacent betting target areas, the analyzer 110 may learn to recognize the boundaries of these betting target areas by recognizing each betting target area as a recognition target. It may also recognize that the chip is on the boundary based on the coordinates of the chip recognized by the first camera 14, the second camera 15, and the third camera 16. In this case, the boundaries have been mapped against the coordinates.

The management system 100 is also equipped with a plurality of betting area antennas 131 built into the betting area 13 to read the RFID tags of the roulette chips bet on the betting area 13, and a betting area reader 130 to control this plurality of betting area antennas 131. The management system 100 has a plurality of dealer chip area antennas 121 built into the dealer chip area 12 to read RFID tags 104 of the roulette chips placed in the dealer chip area 12, and a dealer chip area reader 120 to control a plurality of dealer chip area antennas 121.

The betting area reader 130 and the dealer chip area reader 120 read the information on the RFID tags 104 of the chip in the reading range corresponding to each antenna by driving the corresponding antennas. As described above, in this embodiment, in each of the betting area 13 and dealer chip area 12, a plurality of antennas are arranged so that their reading ranges overlap, so the chip ID stored in the RFID tag 104 of a single chip may be read by two or more antennas at the same time. The betting area reader 130 and the dealer chip area reader 120 merge the duplicate chip IDs read by a plurality of antennas into one and determine that there is a single chip with the chip ID.

The controller 140 controls the first camera 14, the second camera 15, the third camera 16, and the analyzer 110, and controls a plurality of betting area antennas 131 via the betting area reader 130, to perform the dealer support processing for payouts. In the dealer support processing, the controller 140 informs the dealer of the number (or amount) of payout chips to be paid for each winning chip.

The controller 140 generates a dealer support screen as a result of the dealer support processing, and the display 17 displays this dealer support screen.

### (Dealer Support Processing)

The following is a detailed description of the dealer support processing. As described above, when the game result is determined by the ball settling in one of the pockets of the wheel 11, then the dealer first collects the non-winning chips from the betting area 13 to the dealer chip area 12. At this time, the controller 140 controls the betting area reader 130 to read the RFID tags using a plurality of betting area antennas 131 for the winning chips remaining in the betting area 13 to obtain a reading result including the number of winning chips for each color (hereinafter referred to as "first reading results").

And at this time, the controller 140 also controls the analyzer 110 to analyze the images captured by the first camera 14, the second camera 15, and the third camera 16 (hereinafter, these images will be referred to as a "first images"), and determines the number of winning chips (hereinafter referred to as "boundary winning chips") for each color (group) placed across the boundary of the betting target area, and obtains this number as first image analysis results.

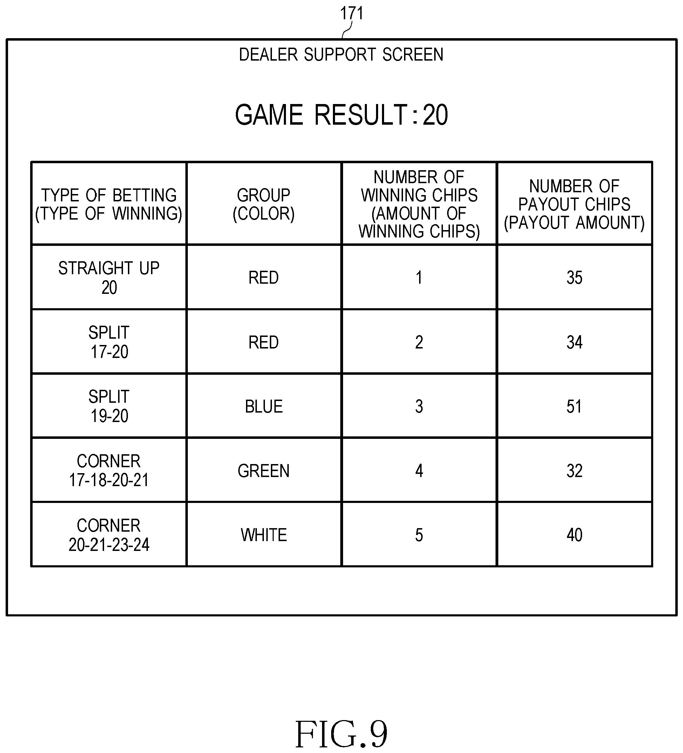

Figure 9 shows an example of the display of the dealer support screen showing the results of the dealer support processing. Figure 9 shows the dealer support screen in the case where the bet shown in Figure 4 was made and the game result was "20" (the ball was placed in pocket No. 20 on wheel 11). As shown in Figure 9, the dealer support screen 171 includes information on the winning chip, the group to which the winning chip belongs (i.e., the color of the winning chip), the number of winning chips (or the amount of winning chips), and the number of payout chips (or a payout amount) for each type of betting (i.e., winning method).

As shown in Figure 9, the winning chips are the chips bet on the straight up 20, the split including 20, and the corner including 20 according to the bets in Figure 4. For these chips, the number of payout chips is calculated according to the payout rate based on the rules. The dealer can check this dealer support screen 171 to know which winning chips to payout and how many chips of which color to pay out for each winning chip, thus making payout operations fast and accurate.

In order to generate such a dealer support screen 171, the controller 140 must determine a betting method for the winning chips, that is, how many winning chips of which group are placed in which betting target area or on the boundary of a betting target area. However, in the example shown in Figure 4, the winning chips are placed around the betting area "20". When the betting chips are close together like this, it is difficult to identify that the chip stacks are placed in different positions and determine which chip is in which position, by reading the RFID tag 104.

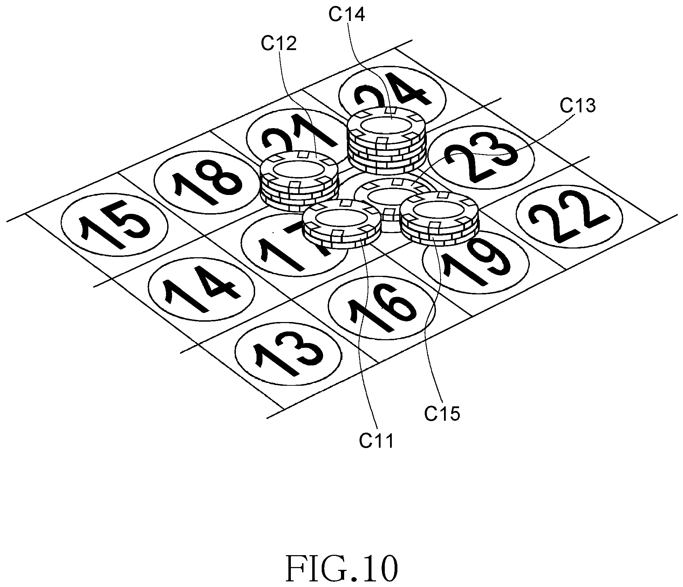

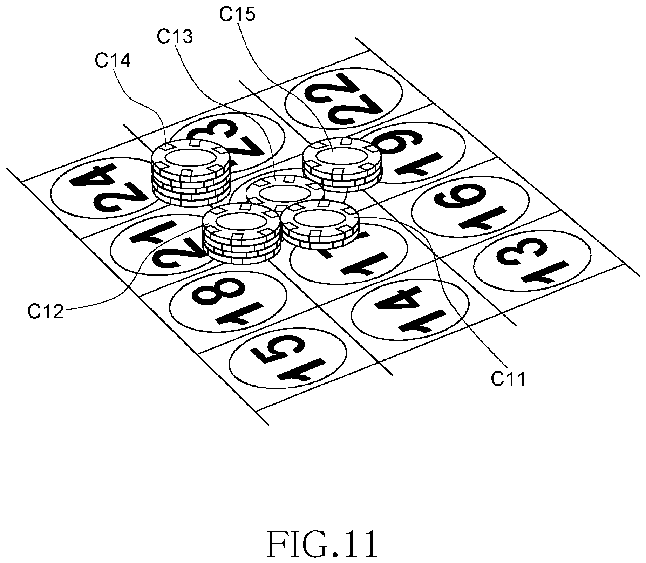

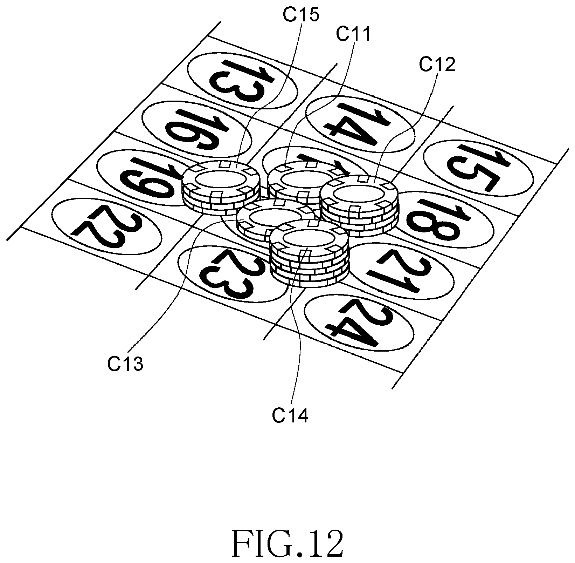

Figures 10 to 12 show examples of winning chips in the images of the first camera 14, the second camera 15, and the third camera 16 of this system, respectively. In all of the images of the first camera 14, the second camera 15, and the third camera 16, some chip stacks in the back as seen from the camera are partially hidden by other chip stacks in the foreground. In image analysis, it may not be easy to accurately recognize the type and number of each chip in such a part of the chip stack in the background. In particular, for winning chips that are surrounded by other winning chips, such as the chips bet on "No. 20" straight-up in the example in Figure 4, partial occlusion by the chip stack in the foreground occurs in the images of the first camera 14, the second camera 15, and the third camera 16.

Therefore, in this embodiment, for the winning chips, a technique is used to accurately recognize the chips in the chip stack that have been partially hidden by other chip stacks.

The controller 140 first determines, based on the first image analysis result by the analyzer 110, the number of winning chips that have not occluded in at least one of the first images and have been recognized by the image analysis (hereinafter referred to as "image-recognizable winning chips"). In the example in Figure 4, the chip C11 and the chip C15 have no occlusion in the first image of the first camera 14, the chip C11 and the chip C12 have no occlusion in the first image of the second camera 15, and the chip C14 has no occlusion in the first image of the third camera 16. Therefore, all chips except the chip C13 are recognizable by image analysis as image-recognizable winning chips.

On the other hand, the chip C13 is a winning chip that has occlusion in the first images of either the first camera 14, the second camera 15 or the third camera 16 (hereinafter referred to as "occlusion winning chip"). Therefore, for such occlusion winning chips, the controller 140 determines the number of occlusion winning chips for each color by subtracting the number of the image-recognizable winning chips for each color recognized by image analysis from the number of the winning chips for each color indicated by the first reading result of the RFID tags 104.

The controller 140 further determines the position of the occlusion winning chips based on the positions of all image-recognizable winning chips. In the case of the example in Figure 4, the bets including: split of Nos. 17 - 20, corner Nos. 17 - 18 - 20 - 21, corner of Nos. 20 - 21 - 23 - 24, and split of Nos. 19 - 20 are recognized in the image as such, the controller 140 determines that the occlusion winning chip is straight up of No. 20, where occlusion can be caused by those image-recognizable winning chips.

Thus, the controller 140 uses the first reading result obtained by reading the RFID tags for the winning chips and the analysis result of the first images to determine the betting method (or betting target) and the number of chips for each color for the winning chips including the occlusion winning chips. Then, the controller 140 calculates the number of payout chips for each color based on the payout rate for each betting method for the determined number of winning chips for each color, and generates a dealer support screen 171 that includes the number of payout chips for each color. In the same way as for chips wagered on the boundary of the inside betting area, for chips wagered on the outside betting area, the first reading result obtained by reading the RFID tags and the analysis results of the first images are used to calculate the winning chips, including the occlusion winning chips, by the method of wagering (or betting target) and by the color of the winning chips.

In the above embodiment, the chip IDs read multiple times by a plurality of betting area antennas 131 in the betting area 13 are combined into one chip ID to determine that there is a single chip with the chip ID in the betting area 13. Instead of this, by reading the chip IDs of the inside betting area and the outside betting area separately, the chip IDs of the chips bet in the inside betting area and the chip ID of the chips bet in the outside betting area may be obtained, respectively. In this case, depending on the position of the betting chips, chips bet in the inside betting area may be read by the betting area antenna 131 in the inside betting area and also by the betting area antenna 131 in the outside betting area, and vice versa. In this case, the signal strength may be used to determine whether the chip in question is bet on the inside betting area or the outside betting area.

### (Alerts for collection and payment irregularities)

The management system 100 of this embodiment also has a function that outputs an alert in the event of any fraudulent collection of non-winning chips. For this purpose, the controller 140 controls the betting area reader 130 at the timing when the player finishes placing bets, and uses the betting area antenna 131 to read the RFID tags 104 of all the betting chips placed in the betting area 13 to obtain the reading result (hereinafter referred to as "second reading result"). And, the controller 140 reads the RFID tags 104 of all the chips in the dealer chip area 12 using the dealer chip area antenna 121 before collecting non-winning chips, and obtains the reading result (hereinafter referred to as "third reading result").

When the game results are finalized and the non-winning chips are collected from the betting area 13 to the dealer chip area 12 by the dealer, the controller 140 controls the dealer chip area reader 120 to read the RFID tags 104 of all the chips in the dealer chip area 12, including the collected non-winning chips, using the dealer chip area antenna 121 to obtain the reading result (hereinafter referred to as "fourth reading result"). The controller 140 then calculates the number of chips for each color that have increased in the dealer chip area 12 due to the collection by taking the difference between the third reading result and the fourth reading result. Meanwhile, the controller 140 calculates the number of chips of each color that have increased in the dealer chip area 12 due to the collection by taking the difference between the first reading result, which only reads the winning chips in the betting area 13, and the second reading result, which reads all the betting chips.

The controller 140 determines whether the increase in chips in the dealer chip area 12 due to the collection and the decrease in chips in the betting area 13 due to the collection obtained in this manner match or not, and outputs an alert if they do not match. The alert is output as visual information via the display 17.

In this embodiment, the number of non-winning chips of each color collected in the dealer chip area 12 is obtained from the difference between the reading result before and after collection, and the dealer chip antenna 121 installed in the dealer chip area 12 is used as an antenna for collecting chips to read the RFID tags 104 of the collected non-winning chips, but instead, a dedicated antenna for collecting chips that only reads the RFID tags 104 of the collected non-winning chips may be used. In this case, the collected non-winning chips are collected and read in the area where the dedicated antenna for collecting chips is installed. The collected non-winning chips are then moved to the dealer chip area 12.

The same method is also used to detect any irregularities in payment. In other words, the management system 100 of this embodiment has a function that outputs an alert in the event of fraudulent payments for winning chips. For this purpose, the controller 140 reads the RFID tags 104 of all chips in the dealer chip area 12 after completing the payment and obtains the reading result (hereinafter referred to as "fifth reading result"). The controller 140 then takes the difference between the fourth reading result for the RFID tags 104 of all chips in the dealer chip area 12 after the collection is completed and the fifth reading result for the RFID tags 104 of all chips in the dealer chip area 12 after the payment is completed, so that the number of chips for each color that have been reduced in the dealer chip area 12 by the payment is calculated.

The controller 140 also reads the RFID tags 104 of all chips in the betting area after payment has been made to obtain a reading result (hereinafter referred to as "sixth reading result"). The controller 140 then takes the difference between the sixth reading result for the RFID tags 104 of all chips in the betting area 13 after the payment has been completed and the first reading result for the RFID tags 104 of all chips in the betting area 13 after the collection has been completed, so that the number of chips for each color increased in the betting area 13 due to payment is calculated.

The controller 140 determines whether the decrease in chips in the dealer chip area 12 due to payment and the increase in chips in the betting area 13 due to payment obtained in this way match or not, and outputs an alert if they do not match.

The above payment fraud detection is based on determining whether the decrease in chips in the dealer chip area 12 matches the increase in chips in the betting area 13 due to payment, thereby ensuring that the payment has been moved from the dealer chip area 12 to the betting chip area 13 without excess or deficiency when payment was made. In the present embodiment, as described above, the betting method (or betting target) and the number of chips for each color are determined for the winning chips, and the number of payout chips for each color is calculated based on the payout rate for each betting method for the number of chips for each color of the winning chips that have been determined. The controller 140 may determine whether the number of chips in the betting area 13 is actually increased by the payment according to this calculated number of payout chips for each color. The increase in chips due to payment in the betting area 13 can be obtained by taking the difference between the sixth reading result and the first reading result as described above.

In addition to or instead of this, the controller 140 may determine whether chips are decreasing in the dealer chip area 12 according to the calculated number of payout chips for each color. The amount of decrease in chips due to payment in the dealer chip area 12 can be obtained by taking the difference between the fourth reading result and the fifth reading result, as described above.

Furthermore, for detection of payment fraud, a dedicated payment chip antenna may be used to read only the payment chips after they are taken from the dealer chip area 12 and before placed in the betting area 13. In this case, the payment chips to be paid into the betting area 13 are placed and read in the area where the dedicated payment chip antenna is installed. The payment chips are then moved by the dealer to the betting area 13 near the corresponding winning chips.

When a dedicated payment chip antenna is used, the controller 140 may determine whether the number of chips for each color reduced by payment in the dealer chip area 12 matches the number of chips for each color read by the dedicated payment chip antenna in order to detect payment fraud. In addition to or instead of this, the controller 140 may determine whether the number of chips for each color read by the dedicated payment chip antenna matches the number of chips for each color increased by payment in the betting area 13 in order to detect payment fraud. Furthermore, when a dedicated payment chip antenna is used, it may be determined whether the calculated payout for each color matches the number of payout chips for each color read by the dedicated payment chip antenna.

### (Patron Rating)

The management system 100 of this embodiment further has a function for performing patron rating. For this function, the management system 100 has a card reader 160 and a player database 170, as shown in Figure 8. The card reader 160 obtains information identifying the player (player ID) by scanning a membership card of a player who wishes to purchase chips for roulette. The controller 140 associates this acquired player ID with the information on the group (color) of roulette chips assigned to that player. This association may be made by the dealer to the controller 140 using an input device which is not shown in Figure 8.

Once the color of the chips is associated with the player ID, the controller 140 records the number of bets (bet amount) for each player in the player database 170 based on the number of chips for each color of all chips bet, as indicated by the second reading result, at the time the betting is completed. By doing this for each game, the player database 170 records the history of the number of bets (bet amounts) and accumulated amounts for each player. Only either the history or the accumulated amount may be recorded in the player database 170.

Players may be identified using a camera. In this case, a camera may be used to capture an image of the face of a player who is about to purchase roulette chips, and the player may be identified by facial recognition using that image. For this purpose, one of the following cameras may be used: first camera 14, the second camera 15, or the third camera 16. In this case, too, the association between the identified player and the color of the roulette chips may be made by the dealer, or this association may also be made using the camera. In other words, the camera may capture an image of a player placing a roulette chip bet, analyze the image to identify the player and recognize the chip, and associate the player with the color of the chip.

### (Example of variation)

In the above embodiment, the first camera 14, the second camera 15, and the third camera 16 all took pictures at a predetermined timing to generate images, and analyzer 110 analyzed the captured images, the analyzer 110 may analyze the captured video or the images extracted from the video.

In the above embodiment, three cameras including the first camera 14, the second camera 15, and the third camera 16 were installed on the table 10, but at least two cameras are sufficient. When two cameras are used, it is desirable that the two cameras are installed diagonally opposite each other in the betting area 13, like the positioning of the first camera 14 and the third camera 16 in the above embodiment. In addition, four or more cameras may be installed. When four cameras are installed, the cameras may be installed at the four corners of the game table 10. In addition, the installation height, angle of view, resolution, etc. of the plurality of cameras may differ from each other in addition to the installation position and capturing direction.

In the above embodiment, for the betting area 13, a plurality of betting area antennas 131 are installed such that they overlap each other, and when the same chip ID is read by more than one betting area antenna 131, the betting area reader 130 integrates them and treats them as the chip ID of a single chip. The controller 140 may identify the approximate location of the chip based on the strength of the signal received from the RFID tag at each betting area antenna 131 for each chip. Similarly, the location of the chip may be determined based on the strength of the received signal from the RFID tags in the plurality of dealer chip area antennas 121 in the dealer chip area 12.

Although the above embodiment describes an example in which roulette chips dedicated to roulette games are used in a roulette game, under certain rules (e.g., when the number of players participating in a roulette game is small and the dealer permits it), betting and payouts may be made using general chips with embedded RFID tags. The betting and settlement may be performed using general chips with embedded RFID tags. In this case, each antenna and each reader of the management system 100 may read the RFID tags of the general chips and perform the same management as above.

### EXPLANATION OF NUMERALS AND CHARACTERS

10 Roulette table
11 Wheel
12 Dealer chip area
13 Betting area
14 First Camera
15 Second Camera
16 Third Camera
17 Display
100 Management system
110 Analyzer
120 Dealer chip area reader
130 Betting area reader
140 Controller
150 Display
160 Card reader
170 Player database
121 Dealer chip area antenna
131 Betting area antenna
171 Dealer support screen
101 Group specific portion
102 Common portion
C Roulette chip

## Claims

1. A management system (100) for managing a roulette game played with roulette chips on a roulette table (10) equipped with a wheel (11) and a betting area (13) in which a plurality of betting target areas are segmented,
wherein in the roulette game, the roulette chips having different colors for different players are used,
wherein the roulette chip has an RFID tag (104) that stores information corresponding to at least its color, and the color appears at least on a side surface of the roulette chip; and
the management system (100) comprising:
at least two cameras (14, 15, 16), each configured to produce an image or video of the betting area (13) from different oblique upward positions;
one or more betting area antennas (131) installed into the betting area (13) and configured to read the RFID tags (104) of the roulette chips placed in the betting area (13);
an analyzer (110) configured to determine, by analyzing the images or video, the number of the roulette chips for each color bet on the betting area (13), a plurality of boundaries of adjacent betting areas (13), and a positional relationship between the roulette chips and the boundaries;
a controller (140) configured to control the at least two cameras (14, 15, 16), the one or more betting area antennas (131), and the analyzer (110) to perform a dealer support processing for payouts; and
a display (17, 150) configured to display a result of the dealer support processing, wherein
the controller (140) is configured to:
read the RFID tag (104) using the one or more betting area antennas (131) to obtain a first reading result for winning chips remaining after a game result has been determined on the wheel (11) and non-winning chips have been collected by a dealer, capture the winning chips using the at least two cameras (14, 15, 16) to obtain first images or videos, and analyze the first images or videos using the analyzer (110) to determine a number of image-recognizable winning chips for each color for which occlusion has not occurred in any one of the first images or videos and a positional relationship between the image-recognizable winning chips and the boundaries;
subtract the number of the image-recognizable winning chips for each color from a number of winning chips for each color indicated by the first reading result to determine a number of occluded winning chips for each color having occlusion in all of the first images and videos and determine the position of the occluded winning chips for each color based on the positional relationship between the image-recognizable winning chips and the boundaries; and
calculate a payout amount for each color based on the number and the positional relationship between the image-recognizable winning chips and the boundaries of image-recognizable winning chips for each color, the number and the position of the occluded winning chips for each color, and a payout multiplier,
wherein the display (17, 150) is configured to display the payout amount for each color calculated by the controller (140).

2. The management system (100) according to claim 1, further comprising:
a collected chip antenna (121) configured to read the RFID tags (104) of the non-winning chips collected by the dealer, wherein
the controller (140) is configured to:
read the RFID tags (104) of all the roulette chips that have been bet in the betting area (13) using the one or more betting area antennas (131) to obtain a second reading result;
obtain a third reading result by reading the RFID tags (104) of the non-winning chips using the collected chip antenna (121); and
output an alert when a result of subtracting a number of non-winning chips for each color, as indicated by the third reading result, from a number of all the roulette chips bet, as indicated by the second reading result, does not match the number of winning chips for each color, as indicated by the first reading result.

3. The management system (100) according to claim 2, further comprising:
a player identification system configured to identify a relationship between a player participating in the roulette game and a color of the roulette chips assigned to the player; and
a recording device configured to record a history and/or accumulation of bet amounts for each of the players, wherein
the controller (140) is configured to determine the history and/or accumulation to be recorded in the recording device based on the number of chips for each color of all the roulette chips that have been bet.

## Patentansprüche

1. Ein Verwaltungssystem (100) zum Verwalten eines Roulettespiels, das mit Roulettechips auf einem Roulettetisch (10) gespielt wird, der mit einem Rad (11) und einem Wettbereich (13) ausgestattet ist, in dem mehrere Wettzielbereiche segmentiert sind,
wobei in dem Roulettespiel die Roulettechips mit unterschiedlichen Farben für unterschiedliche Spieler verwendet werden,
wobei der Roulettechip ein RFID-Tag (104) aufweist, das Informationen speichert, die mindestens seiner Farbe entsprechen, und die Farbe mindestens auf einer Seitenfläche des Roulettechips erscheint; und
wobei das Verwaltungssystem (100) umfasst:
mindestens zwei Kameras (14, 15, 16), die jeweils konfiguriert sind, um ein Bild oder Video des Wettbereichs (13) aus unterschiedlichen schrägen Aufwärtspositionen zu erzeugen;
eine oder mehrere Wettbereichsantennen (131), die in dem Wettbereich (13) installiert und konfiguriert sind, um die RFID-Tags (104) der in dem Wettbereich (13) platzierten Roulettechips zu lesen;
einen Analysator (110), der konfiguriert ist, um durch Analysieren der Bilder oder des Videos die Anzahl der Roulettechips für jede Farbe, die auf den Wettbereich (13) gesetzt wird, mehrere Grenzen benachbarter Wettbereiche (13) und eine Positionsbeziehung zwischen den Roulettechips und den Grenzen zu bestimmen;
eine Steuerung (140), die konfiguriert ist, um die mindestens zwei Kameras (14, 15, 16), die eine oder die mehreren Wettbereichsantennen (131) und den Analysator (110) zu steuern, um eine Croupierunterstützungsverarbeitung für Auszahlungen durchzuführen; und
eine Anzeige (17, 150), die konfiguriert ist, um ein Ergebnis der Croupierunterstützungsverarbeitung anzuzeigen, wobei
die Steuerung (140) konfiguriert ist, um:
das RFID-Tag (104) unter Verwendung der einen oder der mehreren Wettbereichsantennen (131) zu lesen, um ein erstes Leseergebnis für Gewinnchips zu erhalten, die verbleiben, nachdem ein Spielergebnis auf dem Rad (11) bestimmt wurde und Nicht-Gewinnchips von einem Croupier gesammelt wurden, die Gewinnchips unter Verwendung der mindestens zwei Kameras (14, 15, 16) zu erfassen, um erste Bilder oder Videos zu erhalten, und die ersten Bilder oder Videos unter Verwendung des Analysators (110) zu analysieren, um eine Anzahl von bilderkennbaren Gewinnchips für jede Farbe, für die keine Okklusion in einem der ersten Bilder oder Videos aufgetreten ist, und eine Positionsbeziehung zwischen den bilderkennbaren Gewinnchips und den Grenzen zu bestimmen;
die Anzahl der bilderkennbaren Gewinnchips für jede Farbe von einer Anzahl von Gewinnchips für jede Farbe, die durch das erste Leseergebnis angegeben wird, zu subtrahieren, um eine Anzahl von okkludierten Gewinnchips für jede Farbe mit Okklusion in allen ersten Bildern und Videos zu bestimmen und die Position der okkludierten Gewinnchips für jede Farbe basierend auf der Positionsbeziehung zwischen den bilderkennbaren Gewinnchips und den Grenzen zu bestimmen; und
einen Auszahlungsbetrag für jede Farbe basierend auf der Anzahl und der Positionsbeziehung zwischen den bilderkennbaren Gewinnchips und den Grenzen von bilderkennbaren Gewinnchips für jede Farbe, der Anzahl und der Position der okkludierten Gewinnchips für jede Farbe und einem Auszahlungsmultiplikator zu berechnen,
wobei die Anzeige (17, 150) konfiguriert ist, um den Auszahlungsbetrag für jede Farbe, der von der Steuerung (140) berechnet wird, anzuzeigen.

2. Das Verwaltungssystem (100) nach Anspruch 1, ferner umfassend:
eine Sammelchipantenne (121), die konfiguriert ist, um die RFID-Tags (104) der von dem Croupier gesammelten Nicht-Gewinnchips zu lesen, wobei
die Steuerung (140) konfiguriert ist, um:
die RFID-Tags (104) aller Roulettechips, die in dem Wettbereich (13) eingesetzt wurden, unter Verwendung der einen oder der mehreren Wettbereichsantennen (131) zu lesen, um ein zweites Leseergebnis zu erhalten;
ein drittes Leseergebnis durch Lesen der RFID-Tags (104) der Nicht-Gewinnchips unter Verwendung der Sammelchipantenne (121) zu erhalten; und
einen Alarm auszugeben, wenn ein Ergebnis des Subtrahierens einer Anzahl von Nicht-Gewinnchips für jede Farbe, wie durch das dritte Leseergebnis angegeben, von einer Anzahl aller eingesetzten Roulettechips, wie durch das zweite Leseergebnis angegeben, nicht mit der Anzahl von Gewinnchips für jede Farbe übereinstimmt, wie durch das erste Leseergebnis angegeben.

3. Das Verwaltungssystem (100) nach Anspruch 2, ferner umfassend:
ein Spieleridentifikationssystem, das konfiguriert ist, um eine Beziehung zwischen einem Spieler, der an dem Roulettespiel teilnimmt, und einer Farbe der Roulettechips, die dem Spieler zugewiesen sind, zu identifizieren; und
eine Aufzeichnungsvorrichtung, die konfiguriert ist, um einen Verlauf und/oder eine Ansammlung von Einsatzmengen für jeden der Spieler aufzuzeichnen, wobei
die Steuerung (140) konfiguriert ist, um den Verlauf und/oder die Ansammlung, die in der Aufzeichnungsvorrichtung aufgezeichnet werden sollen, basierend auf der Anzahl von Chips für jede Farbe aller Roulettechips, die eingesetzt wurden, zu bestimmen.

## Revendications

1. Un système de gestion (100) pour gérer un jeu de roulette joué avec des jetons de roulette sur une table de roulette (10) équipée d'un cylindre (11) et d'une zone de pari (13) dans laquelle sont segmentées une pluralité de zones cibles de pari,
dans lequel, dans le jeu de roulette, les jetons de roulette ayant des couleurs différentes sont utilisés pour des joueurs différents,
dans lequel le jeton de roulette possède une étiquette RFID (104) qui stocke des informations correspondant au moins à sa couleur, et la couleur apparaît au moins sur une surface latérale du jeton de roulette ; et
le système de gestion (100) comprend :
au moins deux caméras (14, 15, 16), configurées chacune pour produire une image ou une vidéo de la zone de pari (13) depuis des positions obliques hautes différentes ;
une ou plusieurs antennes de zone de pari (131) installées dans la zone de pari (13) et configurées pour lire les étiquettes RFID (104) des jetons de roulette placés dans la zone de pari (13) ;
un analyseur (110) configuré pour déterminer, par analyse des images ou de la vidéo, le nombre des jetons de roulette pour chaque couleur pariés sur la zone de pari (13), une pluralité de limites de zone de pari adjacentes (13), et une relation de position entre les jetons de roulette et les limites ;
un contrôleur (140) configuré pour contrôler les au moins deux caméras (14, 15, 16), les une ou plusieurs antennes de zone de pari (131), et l'analyseur (110) pour exécuter un traitement d'aide de croupier pour les gains ; et
un afficheur (1750) configuré pour afficher un résultat du traitement d'aide au croupier, dans lequel
le contrôleur (140) est configuré pour :
lire l'étiquette RFID (104) en utilisant les une ou plusieurs antennes de zone de pari (131) pour obtenir un premier résultat de lecture pour les jetons gagnants qui restent après qu'un résultat du jeu a été déterminé sur le cylindre (11) et les jetons non gagnants ont été ramassés par un croupier, capturer les jetons gagnants à l'aide des au moins deux caméras (14, 15, 16) pour obtenir des premières images ou vidéos, et analyser les premières images ou vidéos à l'aide de l'analyseur (110) pour déterminer un nombre de jetons gagnants reconnaissables sur image pour chaque couleur pour lesquels une occultation n'est pas survenue dans l'une quelconque des premières images ou vidéos, et une relation de position entre les jetons gagnants reconnaissables sur image et les limites ;
soustraire le nombre de jetons gagnants reconnaissables sur image pour chaque couleur d'un nombre de jetons gagnants pour chaque couleur indiqué par le premier résultat de lecture, pour déterminer un nombre de jetons gagnants occultés pour chaque couleur avec une occultation dans toutes les premières images et vidéos et déterminer la position des jetons gagnants occultés pour chaque couleur sur la base de la relation de position entre les jetons gagnants reconnaissables sur image et les limites ; et
calculer un montant de gain pour chaque couleur sur la base du nombre et de la relation de position entre les jetons gagnants reconnaissables sur image et les limites des jetons gagnants reconnaissables sur image pour chaque couleur, le nombre et la position des jetons gagnants occultés pour chaque couleur, et un multiplieur de gain,
dans lequel l'afficheur (1750) est configuré pour afficher le montant de gain pour chaque couleur calculé par le contrôleur (140).

2. Le système de gestion (100) selon la revendication 1, comprenant en outre :
une antenne de jetons ramassés (121) configurée pour lire les étiquettes RFID (104) des jetons non gagnants ramassés par le croupier, dans lequel
le contrôleur (140) est configuré pour :
lire les étiquettes RFID (104) de tous les jetons de roulette qui ont été pariés dans la zone de pari (13) à l'aide des une ou plusieurs antennes de zone de pari (131) pour obtenir un second résultat de lecture ;
obtenir un troisième résultat de lecture par lecture des étiquettes RFID (104) des jetons non gagnants à l'aide de l'antenne de jetons ramassés (121) ; et
délivrer en sortie une alerte lorsqu'un résultat de la soustraction d'un nombre de jetons non gagnants pour chaque couleur, tel qu'indiqué par le troisième résultat de lecture, d'un nombre de tous les jetons de roulette pariés, tel qu'indiqué par le second résultat de lecture, ne concorde pas avec le nombre de jetons gagnants pour chaque couleur, tel qu'indiqué par le premier résultat de lecture.

3. Le système de gestion (100) selon la revendication 2, comprenant en outre :
un système d'identification de joueur configuré pour identifier une relation entre un joueur participant au jeu de roulette et une couleur des jetons de roulette attribuée au joueur ; et
un dispositif d'enregistrement configuré pour enregistrer un historique et/ou un cumul des montants pariés pour chacun des joueurs, dans lequel
le contrôleur (140) est configuré pour déterminer l'historique et/ou le cumul à enregistrer dans le dispositif d'enregistrement sur la base du nombre de jetons pour chaque couleur de tous les jetons de roulette qui ont été pariés.
